# EUROPÄISCHE PATENTANMELDUNG

(11) **EP 1 028 051 A1**
(43) Veröffentlichungstag der Anmeldung: **16.08.2000**
(21) Anmeldenummer: 99122153.2
(22) Anmeldetag: 05.11.1999
(51) Int. Cl.: B62D 33/067

(54) **Kippvorrichtung für Fahrerhäuser von Lastkraftwagen**

(30) Priorität: 10.02.1999 DE 19905512
(71) Anmelder: Weber-Hydraulik GmbH, 74363 Güglingen (DE)
(72) Erfinder: Schulz, Ulrich, 74336 Brackenheim-Stockheim (DE); Strommer, Georg, 74336 Brackenheim (DE)
(74) Vertreter: Säger, Manfred

(57) **Zusammenfassung**

Bei einer Kippvorrichtung für Fahrerhäuser von Lastkraftwagen ist jeder der beiden Hydraulikzylinder (1) mit einer im Bereich kurz vor der Ausgangs- bzw. Endlage des Kolbens (25) in der Zylinderwand (26) mündenden, von dem Kolben (25) überfahrbaren Umlaufverbindung (20) versehen, die den kolbenstangenseitigen Zylinderraum (21) über die Mündung (24) mit dem kolbenseitigen Zylinderraum (22) verbindet, wobei in jeder Umlaufverbindung (20) ein zu deren Mündung (24) hin schließendes Rückschlagventil (23) vorgesehen ist.

Wenn beim Zurückkippen die Mündung (24) der Umlaufverbindung (20) von dem Kolben (25) überfahren worden ist, schaltet das eine und das andere Zweiwege-Zweipositionsventil (28) unter der Einwirkung der in den Drucksteuerleitungen (31,32) entstandenen Druckdifferenz in die Durchgangsstellung durch. Damit kann ausschließlich unter Einwirkung der äußeren Kräfte die Hydraulikflüssigkeit vom kolbenseitigen Raum (22) des ersten Kippzylinders (1) über das geöffnete Zweiwege-Zweipositionsventil (28) und die das weitere Sperrventil (14) umgehende Bypassleitung (35) zum Tank (3) abfließen.

Hierdurch bedingt sinken beide Kolben (25) bis in die Ausgangslage und ihren Anschlag ab.

## Beschreibung

Die Erfindung betrifft eine Kippvorrichtung für Fahrerhäuser oder dergleichen von Lastkraftwagen gemäß dem Oberbegriff des Hauptanspruchs.

Kippvorrichtungen sind an sich bekannt (EP-A-0099157). Diese bekannten Kippvorrichtungen arbeiten mit zwei doppelt wirkenden Hydraulikzylindern, mit denen das Fahrerhaus über den Totpunkt gekippt werden kann. Bei der bekannten Ausführungsform ist ein einziges hydraulisch entsperrbares Rückschlagventil vorgesehen. Außerdem ist ein Sicherheitsventil gegen den Bruch der Verbindungsleitung vorgesehen, welches verhindern soll, daß bei einem auftretenden Rohrbruch der Verbindungsleitung das Fahrerhaus in dem gekippten Zustand verbleibt.

Bei dieser bekannten Kippvorrichtung führen, wenn nicht über den Totpunkt gekippt wird, geringste Leckagen am Rückschlagventil zum schleichenden Absenken des Fahrerhauses, was von den Personen, die unter dem gekippten Fahrerhaus irgendwelche Wartungs- oder Reparaturarbeiten verrichten müssen, nicht bemerkt wird. Somit besteht die große Gefahr einer schweren Verletzung. Infolgedessen ist es zwingend notwendig, im gekippten Zustand des Fahrerhauses eine mechanische, zusätzliche Sicherung einzulegen, so daß ein schleichendes Absenken des Fahrerhauses infolge von Leckagen nicht möglich ist.

Es ist deshalb schon eine gattungsgemäße Vorrichtung nach dem Oberbegriff des Hauptanspruchs bekannt geworden, bei der ein anderes, dem anderen der beiden Hydraulikzylinder zugeordnetes hydraulisch über eine andere Steuerleitung entsperrbares, zu diesem hin öffnendes Rückschlagventil vorgesehen ist (DE 195 04 719 A1). Außerdem ist in der gemeinsamen Vorlaufleitung ein weiters, ebenfalls hydraulisch über eine weiter Steuerleitung entsperrbares Rückschlagventil vorgesehen, dessen weitere Steuerleitung mit der Rücklaufleitung verbunden ist. Durch die Ausbildung des Öffnungsverhältnisses des weitern Rückschlagventils kleiner als jedes Öffnungsverhältnis des einen oder des anderen Rückschlagventils werden beim Zurückkippen des Fahrerhauses zuerst die Rückschlagventile, welche den beiden Hydraulikzylindern zugeordnet sind, mit dem großen Öffnungsverhältnis geöffnet, wodurch sich in der Verbindungsleitung der beiden Hydraulikzylinder das Prinzip der kommunizierenden Röhre einstellt. Erst bei weiterem Druckanstieg öffnet das hydraulisch entsperrbare weitere Rückschlagventil in der gemeinsamen Vorlaufleitung, wodurch das Fahrerhaus abgesenkt werden kann. Beim Unterbrechen des Drucks kommt es zum Schließen der hydraulisch entsperrbaren Rückschlagventile in umgekehrter Reihenfolge.

Von Nachteil bei dieser bekannten Vorrichtung ist die Tatsache, dass das Zurückkippen nur solange möglich ist, wie in der beim Zurückkippen gemeinsamen Vorlaufleitung Druck herrscht. Somit kann es vorkommen, dass das Zurückkippen dann nicht vollständig ausschließlich unter Einwirkung äußerer Kräfte erfolgt, wenn der Druck in der genannten gemeinsamen Vorlaufleitung zu früh absinkt, bspw. weil die Betätigung der Handpumpe zu früh abgebrochen wird, was unerwünscht ist.

Der Erfindung liegt deshalb die Aufgabe zugrunde, eine gattungsgemäße Vorrichtung nach dem Oberbegriff des Hauptanspruchs in der Phase des Zurückkippens so auszubilden, daß die beiden Kolben der Hydraulikzylinder in der letzten Phase des Zurückkippens ausschließlich unter der Einwirkung äußerer Kräfte, also im wesentlichen aufgrund der Rückkippkraft des Fahrerhauses bis zu ihrem Anschlag eingefahren werden.

Diese Aufgabe wird bei einer gattungsgemäßen Vorrichtung gemäß dem Oberbegriff des Hauptanspruchs erfindungsgemäß durch dessen kennzeichnende Merkmale gelöst.

Erfindungsgemäß wird also unter Beibehaltung der Sicherheit gegen schleichendes Absenken des gekippten Fahrerhauses zugleich der Vorteil erzielt, dass das Fahrerhaus in der letzten Phase der Absenkung allein aufgrund des Eigengewichtes des Fahrerhauses in die Endlage bis zum Anschlag der Kolben absinkt.

Zweckmässige Ausgestaltungen und Weiterbildungen der Erfindung sind in den Unteransprüchen gekennzeichnet.

Ein Ausführungsbeispiel der Erfindung ist nachfolgend unter Bezugnahme auf die Zeichnung näher erläutert, die einen schematischen Schaltplan der erfindungsgemäßen Kippvorrichtung zeigt.

Hierbei sind zwei doppelt wirkende Hydraulikzylinder 1 vorgesehen, die mit einer Vorlaufleitung A (beim Kippen) sowie einer Rücklaufleitung B versehen sind, die beide über ein Vierwege-Zweipositionsventil 2 mit dem Tank 3 oder einer Pumpe 4 wahlweise verbindbar sind. Die beiden -beim Kippen des nicht gezeigten Fahrerhauses- als Rücklaufleitung B zum Tank 3 dienenden Leitungen sind an der Stelle 5 zusammengeschaltet. Vorzugsweise weisen die Rücklaufleitungen B in beiden Hydraulikzylindern 1 eine Blende 6 auf. Ferner ist dem einen Zylinder 1 in der -das Kippen des Fahrerhauses bewirkenden- Vorlaufleitung A ein hydraulisch entsperrbares, zu dem Hydraulikzylinder 1 hin öffnendes Rückschlagventil 7 zugeordnet, dessen Steuerleitung 8 mit der Rücklaufleitung B verbunden ist. Dem anderen Hydraulikzylinder 1 ist ein anderes hydraulisch über eine andere Steuerleitung 9 entsperrbares, zu dem Hydraulikzylinder 1 hin öffnendes Rückschlagventil 10 zugeordnet, dessen andere Steuerleitung 9 ebenfalls mit der Rücklaufleitung B verbunden ist.

Die Vorlaufleitung A jedes Zylinders ist an der Stelle 11 zusammengeschaltet. Zwischen der Stelle 11 und der Pumpe 4 ist vorzugsweise eine Blende 12 vorgesehen. Ferner ist in diesem Stück der gemeinsamen Vorlaufleitung A ein hydraulisch über eine dritte Steuerleitung 13 entsperrbares, zu den beiden Zylindern 1 hin öffnendes weiteres Rückschlagventil 14 vorgesehen, dessen weitere Steuerleitung 13 mit der Rücklaufleitung B verbunden ist.

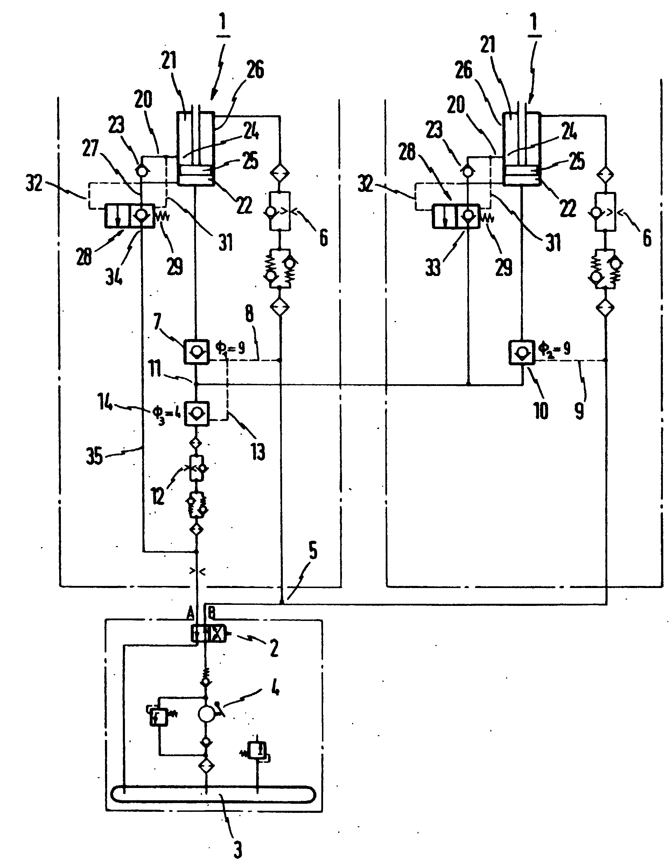

Wird in der (in Figur 1 nicht gezeigten) Stellung des Vierwege-Zweipositionsventils die Vorlaufleitung A der beiden Hydraulikzylinder 1 mit Druck beaufschlagt, so wird Hydraulikflüssigkeit in Öffnungsrichtung der Rückschlagventile 7, 10 und 14 über die Vorlaufleitung A jedem kolbenseitigen Zylinderraum 22 des doppelt wirkenden Hydraulikzylinders zugeführt, wodurch das Fahrerhaus gekippt wird.
Wird die Pumpe vor Erreichen des Totpunktes abgeschaltet, so sperren die Rückschlagventile 7 und 10 aufgrund der auf dem Kolben jedes Hydraulikzylinders lastenden anteiligen Schwerkraft des Fahrerhauses. Wird nunmehr das Vierwege-Zweipositionsventil 2 in die in Figur 1 gezeigte Lage geschaltet, so kann das Zurückkippen des Fahrerhauses erfolgen. Wird nunmehr die Rücklaufleitung B mit Druck der Hydraulikflüssigkeit von der Pumpe 4 beaufschlagt, so werden sämtliche Steuerleitungen 8, 9 und 13 mit dem Pumpendruck beaufschlagt. Infolge des verschiedenen Öffnungsverhältnisses der Rückschlagventile öffnen diese bei einem unterschiedlichen Druck in der Steuerleitung. Nachdem das Öffnungsverhältnis Φ₃ (= 4) des weiteren Rückschlagventils 14 kleiner als sowohl das Öffnungsverhältnis Φ₁ (= 9) des einen Rückschlagventils 7 als auch das Öffnungsverhältnis Φ₂ (= 9) des anderen Rückschlagventils 10 ist, werden beide Hydraulikzylinder 1 über die beiden vorstehend genannten Rückschlagventile 7 und 10 nach dem Prinzip der kommunizierenden Röhre zusammengeschaltet, so daß sich Lastschwankungen auf den beiden Hydraulikzylindern ausgleichen können. Erst bei weiterem Druckanstieg wird das weitere Rückschlagventil 14 geöffnet, so daß über die in diesem Falle zum Rücklauf dienende Vorlaufleitung A die Hydraulikflüssigkeit über die Blende 12 zum Tank 3 gelangen kann.

Weiterhin ist erfindungsgemäss jeder der beiden Hydraulikzylinder 1 mit einer im Bereich kurz vor der Ausgangs- bzw. Endlage des Kolbens 25 in der Zylinderwand 26 mündenden, von dem Kolben 25 überfahrbaren Umlaufverbindung 20 versehen, die den kolbenstangenseitigen Zylinderraum 21 über die Mündung 24 mit dem kolbenseitigen Zylinderraum 22 verbindet, wobei in jeder Umlaufverbindung 20 ein zu deren Mündung 24 hin schließendes Rückschlagventil 23 vorgesehen ist.
Weiterhin ist an jeden kolbenseitigen Zylinderraum 22 mit seinem einen Anschluß 27 ein Zweiwege-Zweipositionsventil 28 angeschlossen, das in seiner mit der Kraft einer Feder 29 belasteten Ausgangslage sperrt und in der anderen Lage durchgeschaltet ist und eine in Richtung der Kraft der Feder 29 wirkende, von dem kolbenstangenseitigen Zylinderraum 21 gesteuerte erste Drucksteuerleitung 31 und eine demgegenüber entgegengesetzt zum Entsperren wirkende, von dem kolbenseitigen Zylinderraum 22 gesteuerte zweite Drucksteuerleitung 32 aufweist.

Es ist schließlich der andere Anschluß 33 des einen Zweiwege-Zweipositionsventil 28 zwischen dem anderen Rückschlagventil 10 und dem weiteren Rückschlagventil 14 angeschlossen, wohingegen der andere Anschluß 34 des anderen Zweiwege-Zweipositionsventils 28 an den beim Zurückkippen gemeinsamen Rücklauf A mittels einer Bypass-Leitung 35 angeschlossen ist.

Beim Zurückkippen funktioniert die Schaltung in der eingangs beschriebenen Art. Lediglich wenn die Mündung 24 der Umlaufverbindung 20 von dem Kolben 25 überfahren worden ist schaltet das eine und das andere Zweiwege-Zweipositionsventil 28 unter der Einwirkung der in den Drucksteuerleitungen 31, 32 entstandenen Druckdifferenz in die Durchgangsstellung durch. Damit kann ausschließlich unter Einwirkung der äußeren Kräfte die Hydraulikflüssigkeit vom kolbenseitigen Raum 22 des ersten Kippzylinders 1 über das geöffnete Zweiwege-Zweipositionsventil 28 und die das weitere Sperrventil 14 umgehende Bypassleitung 35 zum Tank 3 abfließen. Der andere Anschluß 33 des dem anderen Kippzylinder zugeordneten Zweiwege-Zweipositionsventil 28 ist zwischen dem anderen Rückschlagventil 10 und dem weiteren Rückschlagventil 14 angeschlossen, so dass die beiden kolbenseitigen Zylinderräume 22 der beiden Zylinder 1 über das erste Rückschlagventil 7 nach dem Prinzip der kommunizierenden Röhre miteinander verbunden sind. Hierdurch bedingt sinken beide Kolben 25 bis in die Ausgangslage und ihren Anschlag ab.

## Patentansprüche

1. Kippvorrichtung für Fahrerhäuser von Lastkraftwagen oder dgl, mit zwei doppelt wirkenden Hydraulikzylindern (1), deren beide beim Kippen von einer Ausgangslage der beiden Kolben als Rücklaufleitung (B) zum Tank (3) dienende Leitungen vorzugsweise je eine Blende (6) aufweisen und zusammengeschaltet sind und deren beide bei Beaufschlagung mit unter Druck stehender Hydraulikflüssigkeit das Kippen jeweils bewirkenden Vorlaufleitungen (A) über je ein mit je einer Steuerleitung (8,9) hydraulisch entsperrbares, zu dem einen oder anderen der beiden Hydraulikzylinder (1) hin öffnendes einess bzw. anderes Rückschlagventil (7,10) versehen sind, wobei jede Steuerleitung (8,9) mit der beim Zurückkippen zugeordneten Vorlaufleitung (B) des einen oder des anderen Hydraulikzylinders verbunden ist, wobei das weitere, hydraulisch über eine weitere Steuerleitung (13) entsperrbare Rückschlagventil (14) in der beim Zurückkippen gemeinsamen Rücklaufleitung (A) vorgesehen ist, dessen weitere Steuerleitung (13) mit der beim Zurückkippen gemeinsamen Vorlaufleitung (B) verbunden ist und wobei das Öffnungsverhältnis (Φ₃) des weiteren Rückschlagventils (14) kleiner als das Öffnungsverhältnis (Φ₁) des einen und das Öffnungsverhältnis (Φ₂) des anderen Rückschlagventils (10) ist,
**dadurch gekennzeichnet,**
- daß jeder der beiden Hydraulikzylinder (1) mit einer im Bereich kurz vor der Ausgangslage des Kolbens (25) in der Zylinderwand mündenden, von dem Kolben (25) überfahrbaren Umlaufverbindung (20) versehen ist, die den kolbenstangenseitigen Zylinderraum (21) über die Mündung (24) mit dem kolbenseitigen Zylinderraum (22) verbindet,
- daß in jeder Umlaufverbindung (20) ein zu deren Mündung (24) hin schließendes Rückschlagventil (23) vorgesehen ist,
- daß an jeden kolbenseitigen Zylinderraum (22) mit seinem einen Anschluß (27) ein Zweiwege-Zweipositionsventil (28) angeschlossen ist, das in seiner mit der Kraft einer Feder (29) belasteten Ausgangslage sperrt und in der anderen Lage durchgeschaltet ist und eine in Richtung der Kraft der Feder (29) wirkende, von dem kolbenstangenseitigen Zylinderraum (21) gesteuerte erste Drucksteuerleitung (31) und eine demgegenüber entgegengesetzt zum Entsperren wirkende, von dem kolbenseitigen Zylinderraum (22) gesteuerte zweite Drucksteuerleitung (32) aufweist,
- daß der andere Anschluß (33) des einen Zweiwege-Zweipositionsventil (28) zwischen dem anderen Rückschlagventil (10) und dem weiteren Rückschlagventil (14) angeschlossen ist
- und daß der andere Anschluß (34) des anderen Zweiwege-Zweipositionsventils (28) an den beim Zurückkippen gemeinsamen Rücklauf (A) mittels einer Bypass-Leitung (35) angeschlossen ist.

2. Vorrichtung nach Anspruch 1, dadurch gekennzeichnet, daß an jeden kolbenseitigen Zylinderraum (22) das Zweiwege-Zweipositionsventil (28) mit seinem einen Anschluß (27) über die Umlaufverbindung (20) angeschlossen ist.
